# EUROPÄISCHE PATENTSCHRIFT

(11) **EP 2 188 088 B1**
(45) Veröffentlichungstag und Bekanntmachung des Hinweises auf die Patenterteilung: **01.12.2010**
(21) Anmeldenummer: 08801981.5
(22) Anmeldetag: 10.09.2008
(51) Int. Cl.: B23Q 11/00

(54) **KLEMM- UND BREMSSYSTEM**
CLAMPING AND BRAKING SYSTEM
SYSTÈME DE SERRAGE ET DE FREINAGE

(30) Priorität: 14.09.2007 DE 102007044053
(43) Veröffentlichungstag der Anmeldung: 26.05.2010
(73) Patentinhaber: HEMA Maschinen- und Apparateschutz GmbH, 63500 Seligenstadt (DE)
(72) Erfinder: LIKUS, Edmund, 63500 Seligenstadt (DE)
(74) Vertreter: Tergau & Pohl Patentanwälte
(86) Internationale Anmeldenummer: PCT/EP2008/007415
(87) Internationale Veröffentlichungsnummer: WO 2009/036918

(56) Entgegenhaltungen:
- EP-A- 0 113 802
- EP-A- 0 358 531
- DE-A1- 2 221 581
- GB-A- 894 030
- GB-A- 984 824
- JP-A- 58 196 950

## Beschreibung

Die Erfindung bezieht sich auf eine Maschinenanlage, insbesondere zur Herstellung von Werkzeug- oder Maschinenteilen, mit einer Maschinenwelle zum Antrieb eines Werkzeugkopfes oder Werkstückträgers, der ein als Passivbremssystem ausgebildetes Sicherheitsbremssystem (8) zugeordnet ist.

Bei der Herstellung von Werkzeug- oder Maschinenteilen werden Bearbeitungsmaschinen, insbesondere Arbeitsspindeln, Rund- und Schwenktische verwendet, die mittels an einer rotierenden Maschinenwelle befestigten Schneidwerkzeugen Material von einem Werkstück zerspanend abtragen, um es in die gewünschte Form zu bringen. Weiterhin werden solche Bearbeitungsmaschinen dazu verwendet, Werkzeuge oder Werkstücke in die geeignete Bearbeitungsposition zu stellen oder Werkstücke mit entsprechenden Drehzahlen zu bewegen. Voraussetzung für ein genaues und exaktes Bearbeiten ist dabei eine hohe Drehzahl der Maschinenwelle und eine geeignete Materialwahl der Fräswerkzeuge bzw. der Werkzeugköpfe. Notfall- bzw. Sicherheitssysteme haben daher die Aufgabe, die Maschinenwelle bei Störung oder Ausfall der Systeme, wie beispielsweise Stromausfall, Kabelbruch zu stoppen bzw. in einer festen Position zu halten und damit zu fixieren.

Gängige Bearbeitungsmaschinen verfügen dabei über elektromagnetische, pneumatische oder hydraulische Sicherheitsbremsen. Solche Sicherheitsbremsen verfügen über einen Reibbelag, der mittels Kraftübertragung reibschlüssig mit der Maschinenwelle verbunden werden kann. Dadurch wird eine zügige Bremsung der Maschinenwelle ermöglicht. Da bei einer Notfallbremsung die auftretenden Reibungskräfte naturbedingt sehr hoch sind, führt dies nicht nur zu einem Abrieb des Reibbelags der Sicherheitsbremsen, sondern auch zu einer Beschädigung der Maschinenwelle an den Stellen, an denen der Reibbelag in Kontakt mit der Maschinenwelle tritt. Somit fügt sich an eine Notfallbremsung eine zeitaufwändige Wartung der Maschine mit evtl. kostenintensiver Auswechselung der Maschinenwelle.

Derartige Sicherheitsbremssysteme für Maschinenanlagen sind beispielsweise aus der Druckschrift EP 0 113 802 A und den dort zitierten Druckschriften bekannt.

Der Erfindung liegt daher die Aufgabe zugrunde, eine Maschinenanlage mit einem Bremssystem der oben genannten Art anzugeben, welche bei einer Notfallbremsung die Maschinenwelle nicht beschädigt und eine Abbremsung der Maschinenwelle in gewohnter Präzision und Sicherheit liefert.

Diese Aufgabe wird erfindungsgemäß gelöst, indem das Sicherheitsbremssystem eine die Maschinenwelle umgebende Bremsscheibe umfasst, die bedarfsweise mit einer Anzahl von an zugeordneten Druckbolzen angeordneten Reibbelägen in reibschlüssigen Kontakt bringbar ist, wobei als druckführendes Medium Druckluft oder eine Hydraulikflüssigkeit vorgesehen ist und wobei jedem Druckbolzen eine Bremsverstärker-Druckkamer zugeordnet ist.

Die Erfindung geht dabei von der Überlegung aus, dass zur Vermeidung von Beschädigungen der Maschinenwelle bei Notfallbremsungen durch die Reibbeläge diese nicht reibschlüssig mit der Maschinenwelle verbunden werden sollten. Die reibschlüssige Verbindung der Reibbeläge sollte daher mit einem Material geschehen, welches adaptiv an der Maschinenwelle montiert und bei Beschädigung bei einer Notfallbremsung auf einfachste Weise wieder entfernt werden kann. Daher sollte das Bremssystem eine die Maschinenwelle umgebende Bremsscheibe umfassen. Diese Bremsscheibe sollte dann bei einer Notfallbremsung mit einer Anzahl von an zugeordneten Druckkolben angeordnete Reibbeläge in reibschlüssigen Kontakt gebracht werden.

Um eine Notfallbremsung garantieren zu können, ist das Bremssystem als Passivbremssystem ausgebildet. Dies bedeutet, dass das Bremssystem nur unter Krafteinfluss in geöffnetem bzw. gelöstem Zustand verharrt, wodurch die Maschinenwelle in Betrieb genommen werden kann. Sollte dieser Krafteinfluss, der das Bremssystem im geöffnetem Zustand hält, durch einen Maschinenausfall oder bewusst durch einen Notabschaltungshebel wegfallen, schließt die Bremse automatisch und die an den Druckkolben angeordneten Reibbeläge treten mit der Bremsscheibe in reibschlüssigen Kontakt. Dies hat eine Bremsung der Maschinenwelle zur Folge durch das nunmehr angezogene Bremssystem.

Weiterhin ist jedem Druckbolzen eine Bremsverstärker-Druckkammer zugeordnet. Über diese Druckkammer können die dem Druckbolzen zugeordneten Reibbeläge aktiv gegen die Bremsscheibe gedrückt werden. Dies geschieht durch Füllung der Bremsverstärker-Druckkammer über zusätzliche an der Oberfläche des Bremssystems angebrachte Anschlüsse.

Als druckführendes Medium zur Kraftübertragung wird Druckluft verwendet. Dies liefert auf einfachste Weise die benötigte Sicherheit bei der Notfallbremsung, welche beispielsweise durch Belüftung des Bremssystems schnell und präzise erreicht werden kann. In alternativer Ausführung wird als druckführendes Medium eine Hydraulikflüssigkeit verwendet. Durch die Verwendung einer Hydraulikflüssigkeit anstelle von Druckluft ist es möglich, höhere Drücke und damit eine erhöhte Bremskraft zu erzeugen. Dabei ist es je nach Anwendungsgebiet und benötigter Bremskraft möglich, die Freistell-Druckkammer bzw. die Bremsverstärker-Druckkammer mit unterschiedlichen Druckmedien zu füllen, um eine der Maschinenwelle optimal angepasste Bremskraft zu erhalten. Üblicherweise wird allerdings für beide Druckkammern das gleiche Druckmedium verwendet.

Um die bei einem Passivbremssystem benötigte Bremskraft ohne äußere Einwirkung der Kräfte zu erzeugen, ist in vorteilhafter Ausführung eine dem Druckbolzen zugeordnete Feder vorgespannt. Dies könnte prinzipiell eine Zugfeder zum Ziehen des Reibbelags in Richtung Bremsscheibe, aber auch eine Druckfeder, welche dann an der dem Reibbelag gegenüberliegenden Seite des Druckbolzens angeordnet ist, sein.

Zum Öffnen der Bremse ist in vorteilhafter Ausführung reibbelagseitig an jeweils einer Anzahl von Druckbolzen eine Freistell-Druckkammer angeordnet. Diese Druckkammer kann über eine Anzahl von an der Oberfläche des Drucksystems angeordnete Anschlüsse mit einem druckführenden Medium gefüllt werden. Dadurch wird die Feder für den Betrieb der Maschinenwelle weiter vorgespannt.

Die bei einer Bremsung einer schnell rotierenden Scheibe auftretenden Momente können zur Folge haben, dass sich die Bremsscheibe bei einer Notfallbremsung in Richtung der auftretenden Kräfte verschiebt und somit evtl. die Maschinenwelle beschädigt. Um diese Gefahr zu verringern, sind in vorteilhafter Ausgestaltung einzelne, jeweils einen an einem zugeordneten Druckkolben angeordneten Reibbelag umfassende Bremselemente symmetrisch um die Mittelachse der Maschinenwelle angeordnet. Diese gleichmäßige und kreisförmige Verteilung der Bremselemente ermöglicht eine Minimierung der auftretenden Momente und liefert damit einen weiteren Schutz für die zu bremsende Maschinenwelle.

Die mit der Erfindung erzielten Vorteile bestehen insbesondere darin, dass durch die Verwendung einer Bremsscheibe als ein zum einen starr mit der Maschinenwelle verbundenes Element und zum anderen als Teil des Bremssystems die eigentliche Maschinenwelle bei einer Notfallbremsung nicht beschädigt wird. Ein Auswechseln des Bremssystems aufgrund von Verschleiß ist daher ohne Ausbau der Maschinenwelle und auf einfache und kostengünstige Art und Weise möglich. Des Weiteren kann über einen externen Anschluss und eine an dem Druckbolzen angeordnete Bremsverstärker-Druckkammer die Bremskraft gezielt und aktiv von außen im Falle einer Bremsung verstärkt werden. Dadurch kann unterschiedlichen Anforderungsprofilen an ein Bremssystem Rechnung getragen werden.

Ein Ausführungsbeispiel der Erfindung wird anhand einer Zeichnung näher erläutert. Darin zeigen:
- Fig. 1: einen Schnitt durch eine Maschinenanlage mit einer Welle und mit montiertem Klemm- bzw. Bremssystem,
- Fig. 2: eine schematisierte Darstellung eines Klemm- bzw. Bremselements, und
- Fig. 3: eine Draufsicht eines Klemm- bzw. Bremssystems.

Gleiche Teile sind in allen Figuren mit denselben Bezugszeichen versehen.

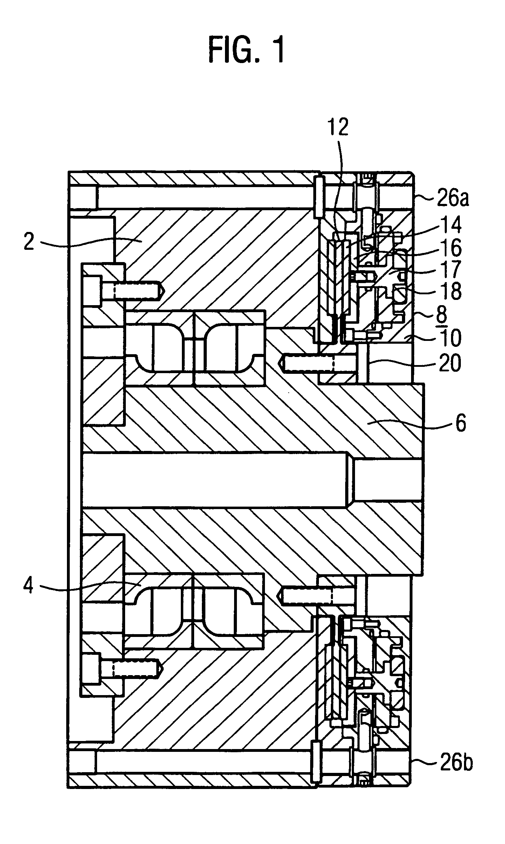

Die Maschinenanlage 1 gemäß Fig. 1 umfasst ein Maschinengehäuse 2 mit einer drehbar in einer Lagerung 4 gelagerten Maschinenwelle 6. Diese Maschinenwelle 6 ist zum Bearbeiten von Materialien, insbesondere von Metallen zur Herstellung von Maschinen- oder Werkzeugteilen, an einem Ende mit einem Werkzeugkopf oder Werkstückträger (nicht dargestellt) ausgestattet. Zur Notfall- bzw. Sicherheitsbremsung ist die Maschinenwelle 6 mit einer ringförmigen Klemm- bzw. Bremssystem 8 ausgestattet. Dieses Klemm- bzw. Bremssystem 8 ist auf der Maschinenwelle 6 aufgesteckt und mittels einer Anzahl von Schraubverbindungen an dieser befestigt.

Zur sicheren und zügigen Bremsung der Maschinenwelle 6 befinden sich in dem Klemm- bzw. Bremssystem 8 mehrere kreisförmig angeordnete Bremselemente 10. Eine solche Anordnung minimiert die bei einer Bremsung einer schnell rotierenden Scheibe auftretenden Momente. Durch die gezielte Anordnung der Bremselemente 10 kreisförmig um die Mittelachse der Maschinenwelle 6 wird die Möglichkeit einer Beschädigung der Maschinenwelle 6 durch ein Verziehen der Bremsscheibe 12 in Richtung der auftretenden Kräfte verringert. Diese Bremselemente 10 verfügen jeweils über eine mit einem Reibbelag 14 versehene Druckscheibe 16, die mittels eines Druckbolzens 18 im Falle der Bremsung an die Bremsscheibe 12 gedrückt und reibschlüssig mit ihr in Kontakt treten. Diese Bremsscheibe 12 ist über eine Schraubverbindung 20 starr mit der Maschinenwelle 6 verbunden.

Zur Öffnung des Bremssystems 8 befindet sich in jedem Bremselement 10 eine dem Druckkolben 17 zugeordnete Freistell-Druckkammer 32. Diese kann mit Druckluft oder einer Hydraulikflüssigkeit gefüllt werden und durch den dadurch erzeugten Druck den dem Reibbelag 14 zugeordneten Druckbolzen 18 von der Bremsscheibe 12 lösen.

Das Bremssystem 8 nach Fig. 1 umfasst des Weiteren zwei Anschlüsse 26a, 26b, die zur Füllung zum einen der Freistell-Druckkammer 32 und zum anderen zur Füllung der Bremsverstärker-Druckkammer 34 gedacht sind.

Durch die gezielte Konstruktion der Bremsscheibe 12 als zum einen als Teil des auswechselbaren Klemm- bzw. Bremssystems 8 und zum anderen als über die Schraubverbindungen 20 starr mit der Maschinenwelle 6 verbundenes Element wird die Maschinenwelle 6 bei einer Notfallbremsung durch Verschleiß und Reibungsabrieb nicht beschädigt. Eine mögliche Beschädigung tritt nur auf der Bremsscheibe 12 und in den Reibbelägen 14 auf, die allerdings einfach, schnell und kostengünstig ausgetauscht werden können.

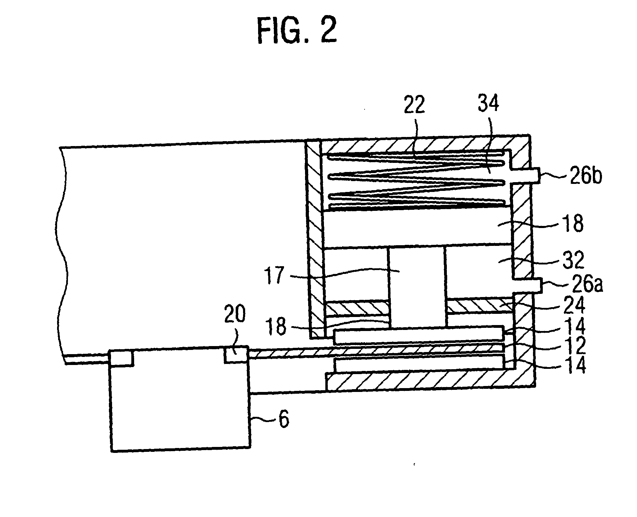

Ein Klemm- bzw. Bremselement 10 ist in Fig. 2 noch einmal vergrößert dargestellt. Dabei ist zu erkennen, dass nur die Bremsscheibe 12 über eine Schraubverbindung 20 mit der Maschinenwelle 6 starr verbunden ist. Diese Bremsscheibe 12 kann durch zwei Reibbeläge 14, die auf beiden Seiten der Bremsscheibe 12 positioniert sind, gebremst werden, was eine Bremsung der Maschinenwelle 6 zur Folge hat. Der nötige Druck, der zur Bremsung der Maschinenwelle 6 benötigt wird, wird durch eine Druckfeder 22 aufgebaut. Diese Druckfeder 22 schiebt im Bremsfall einen an einem Druckkolben 17 angeordneten Druckbolzen 18 entlang einer Führungsplatte 24 in Richtung der Bremsscheibe 12. An diesem Druckbolzen 18 befindet sich an dem zur Bremsscheibe befindlichen Ende eine Druckscheibe (nicht dargestellt), die den Reibbelag 14 umfasst. Durch diese Druckscheibe wird ein gleichmäßiger und großflächiger Druck des Reibbelags 14 auf die Bremsscheibe 12 erzielt. Der Druckkolben 17 kann durch eine reibbelagseitig angeordnete Freistell-Druckkammer 32 von der Bremsscheibe 12 weggeführt werden und so die Druckfeder 22 weiter vorspannen. Dabei kann jedem Druckkolben 17 bzw. Druckbolzen 18 eine eigene Freistell-Druckkammer 32 zugeordnet sein oder eine Mehrzahl von Druckkolben 17 ist einer gemeinsamen Freistell-Druckkammer 32 zugeordnet. Dadurch wird das Bremselement 10 geöffnet und die Bremswirkung aufgegeben. Dies geschieht über ein über einen Anschluss 26a in die Freistell-Druckkammer 32 geleitetes Druckmedium. Als Druckmedien eignen sich dabei besonders Druckluft und Hydraulikflüssigkeiten. Im Bremsfall wird das Druckmedium aus der Freistell-Druckkammer 32 geleitet und der Druckkolben 17 durch die Kraft der gespannten Druckfeder 22 in Richtung Bremsscheibe 12 beschleunigt. Aufgrund von Reibungskräften zwischen den Reibbelägen 14 und der Bremsscheibe 12 erfolgt eine Bremsung der Maschinenwelle 6. Die Materialpaarungen der Reibbeläge 14 und der Bremsscheibe 12 können dabei an die Bedürfnisse einer harten oder weichen Bremsung angepasst werden. Dieses Passivbremssystem hat den Vorteil, dass bei einem Maschinenausfall oder einer Störung des Bremssystems 8 dieses automatisch schließt und damit die Maschinenwelle 6 in einer Notfallbremsung zum Stehen kommt.

Des Weiteren verfügt das Bremselement 10 über einen zweiten externen Anschluss 26b, über den eine Bremsverstärker-Druckkammer mit einem druckführenden Medium gefüllt werden kann. Dies dient dazu, die Bremskraft aktiv von Außen zu verstärken und den Druckbolzen 18 mit Hilfe des druckführenden Mediums in Richtung Bremsscheibe 12 zu beschleunigen. Dadurch kann die Bremskraft in Abhängigkeit des verwendeten Druckmediums aus einfachste Weise verstärkt werden.

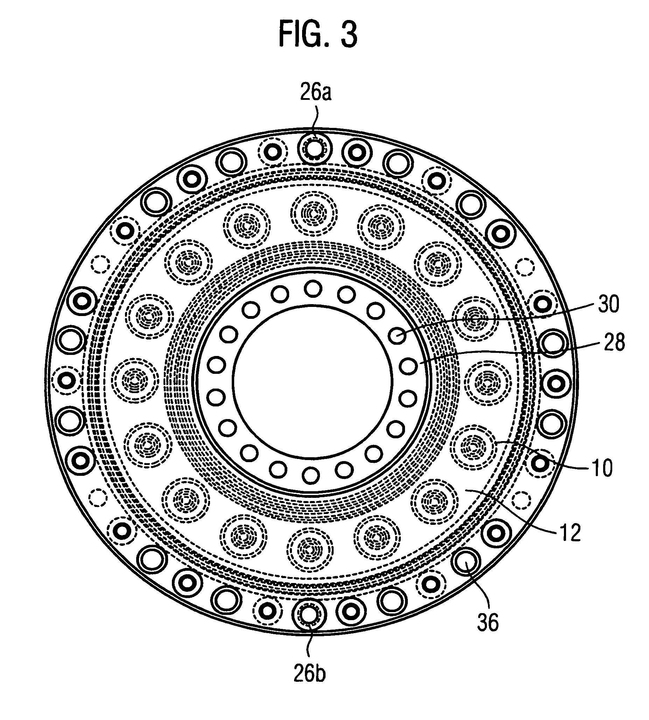

In Fig. 3 ist eine Draufsicht eines Klemm- bzw. Bremssystems 8 dargestellt. Dieses Klemm- bzw. Bremssystem 8 wird durch die in der Mitte befindliche Öffnung auf die Maschinenwelle (nicht dargestellt) geschoben und durch die in einem inneren Ring 28 befindlichen Feststellöffnungen 30 die Bremsscheibe 12 an der Maschinenwelle fixiert. Ausgehend von diesem inneren Ring verläuft die Bremsscheibe 12 im Inneren des Klemm- bzw. Bremssystems 8. Ebenfalls im Inneren befinden sich kreisförmig um die Mittelachse verteilt die einzelnen Bremselemente 10. Im Ausführungsbeispiel in Fig. 3 sind dies 16 Bremselemente 10, die symmetrisch um die Mittelachse verteilt sind. Im Randbereich des Klemm- bzw. Bremssystems 8 befinden sich des Weiteren Anschlüsse 26a, 26b zum Öffnen der Klemmung bzw. der Bremse und Anschlüsse zur Verstärkung der Klemm- bzw. Bremskraft und Befestigungslöcher 36 zur Befestigung des Bremssystems 8 am Maschinengehäuse 2.

Das Bremssystem 8 gemäß Fig. 3 ist in Form einer Vollscheibe ausgebildet. Es ist allerdings auch möglich und je nach Anwendungsbereich sogar vorteilhaft, nur ein einzelnes Kreissegment zu verwenden. Außerdem ist es möglich, ein solches Bremssystem 8, dann schwimmend gelagert, auf beiden Seiten der Bremsscheibe 12 zu verwenden. Dadurch wird erreicht, dass keine Kräfte auf das Maschinengehäuse und die Maschinenwelle wirken.

### Bezugszeichenliste

- 1: Maschinenanlage
- 2: Maschinengehäuse
- 4: Lagerung
- 6: Maschinenwelle
- 8: Sicherheitsbremssystem
- 10: Bremselement
- 12: Bremsscheibe
- 14: Reibbelag
- 16: Druckscheibe
- 17: Druckkolben
- 18: Druckbolzen
- 20: Schraubverbindung
- 22: Druckfeder
- 24: Führungsplatte
- 26a: Anschluss
- 26b: Anschluss
- 28: innerer Ring
- 30: Feststellöffnung
- 32: Freistell-Druckkammer
- 34: Bremsverstärker-Druckkammer
- 36: Befestigungslöcher

## Patentansprüche

1. Maschinenanlage (1), insbesondere zur Herstellung von Werkzeug- oder Maschinenteilen, mit einer Maschinenwelle (6) zum Antrieb eines Werkzeugkopfes oder Werkstückträgers, der ein als Passivbremssystem ausgebildetes Sicherheitsbremssystem (8) zugeordnet ist, wobei das Sicherheitsbremssystem (8) eine die Maschinenwelle (6) umgebende Bremsscheibe (12) umfasst, die bedarfsweise mit einer Anzahl von an zugeordneten Druckbolzen (18) angeordneten Reibbelägen (14) in reibschlüssigen Kontakt bringbar ist, wobei als druckführendes Medium Druckluft oder eine Hydraulikflüssigkeit vorgesehen ist, **dadurch gekennzeichnet, dass**
jedem Druckbolzen eine Bremsverstärker-Druckkammer (34) zugeordnet ist.

2. Maschinenanlage (1) nach Anspruch 1, **dadurch gekennzeichnet, dass** zur Herstellung des reibschlüssigen Kontaktes der jeweilige Druckbolzen durch eine zugeordnete Feder (22) gegenüber der Bremsscheibe (12) vorgespannt ist.

3. Maschinenanlage (1) nach einem der Ansprüche 1 bis 2, **dadurch gekennzeichnet, dass**
reibbelagseitig jeweils einer Anzahl von Druckbolzen (18) eine Freistell-Druckkammer (32) zugeordnet ist.

4. Maschinenanlage (1) nach einem der Ansprüche 1 bis 3, **dadurch gekennzeichnet, dass**
eine Anzahl von Bremselementen (8) mit jeweils einem an einem zugeordneten Druckkolben (17) angeordneten Reibbelag (14) symmetrisch um die Mittelachse der Maschinenwelle (6) angeordnet sind.

## Claims

1. A machinery plant (1), in particular for producing tool or machine components, having a machine shaft (6) for driving a tool head or workpiece carrier, with which a safety braking system (8) designed as a passive braking system is associated, the safety braking system (8) comprising a brake disk (12) surrounding the machine shaft (6), it being possible to bring said brake disk (12), as needed, into frictional contact with a number of friction linings (14) arranged on associated pressure bolts (18), compressed air or a hydraulic fluid being provided as pressure-carrying medium, **characterized in that**
a brake-booster pressure chamber (34) is associated with each pressure bolt.

2. The machinery plant (1) of claim 1, **characterized in that**
for establishing the frictional contact, the corresponding pressure bolt is prestressed, as against the brake disk (12), by an associated spring (22).

3. The machinery plant (1) of any of claims 1 to 2, **characterized in that**
on the side of the friction lining, a release pressure chamber (32) is in each case associated with a number of pressure bolts (18).

4. The machinery plant (1) of any of claims 1 to 3, **characterized in that**
a number of brake elements (8), each having a friction lining (14) arranged on an associated pressure piston (17), is arranged symmetrically around the center axis of the machine shaft (6).

## Revendications

1. Installation mécanique (1), en particulier pour produire des composants d'outils ou de machines, ayant un arbre de machine (6) pour entraîner une tête d'outil ou un support de pièce, à laquelle est affecté un système de freinage de sécurité (8) formé comme un système de freinage passif, le système de freinage de sécurité (8) comprenant disque de frein (12) entourant l'arbre de machine (6), il étant possible de mettre dit disque de frein (12), en cas de besoin, en contact par friction avec un nombre de garnitures de friction (14) disposées sur des boulons de pression (18) affectés, de l'air comprimé ou un fluide hydraulique étant prévu comme milieu conducteur de pression, **caractérisée en ce**
**qu'**une chambre de compression servofrein (34) est affectée à chaque boulon de pression.

2. Installation mécanique (1) selon la revendication 1, **caractérisée en ce que**,
pour établir le contact par friction, le boulon de pression correspondant est précontrainte, vis-à-vis du disque de frein (12), par un ressort (22) affecté.

3. Installation mécanique (1) selon l'une quelconque des revendications 1 à 2, **caractérisée en ce que**,
du côté de la garniture de friction, une chambre de compression de libération (32) est affectée à chaque fois à un nombre de boulons de pression (18).

4. Installation mécanique (1) selon l'une quelconque des revendications 1 à 3, **caractérisée en ce**
**qu'**un nombre d'éléments de freinage (8), chacun d'eux ayant une garniture de friction (14) disposée sur un piston de compression (17) affecté, est disposé de façon symétrique autour de l'axe central de l'arbre de machine (6).
